Europäisches Patentamt

European Patent Office

Office européen des brevets

(11) Veröffentlichungsnummer: **0 241 933 B1**

(12) **EUROPÄISCHE PATENTSCHRIFT**

(45) Veröffentlichungstag der Patentschrift: 08.01.92

(51) Int. Cl.⁵: **B21D 37/14**, B30B 15/02, B29C 31/00

(21) Anmeldenummer: 87105653.7

(22) Anmeldetag: 16.04.87

(54) Presse mit einem Gestell und einem aus wenigstens zwei Teilen bestehenden Werkzeug.

(30) Priorität: 18.04.86 CH 1575/86

(43) Veröffentlichungstag der Anmeldung:
21.10.87 Patentblatt 87/43

(45) Bekanntmachung des Hinweises auf die
Patenterteilung:
08.01.92 Patentblatt 92/02

(84) Benannte Vertragsstaaten:
CH DE ES FR GB IT LI

(56) Entgegenhaltungen:
DE-A- 2 740 042        DE-C- 3 335 330
FR-A- 2 229 505        FR-A- 2 358 238
GB-A- 858 575          US-A- 4 140 449
US-A- 4 449 907

PATENT ABSTRACTS OF JAPAN, Band 7, Nr.
50 (M-197)[1195], 26. Februar 1983; & JP-A-57
199 531 (NIHON KEIKINZOKU K.K.) 07-12-1982

WERKSTATTSTECHNIK, ZEITSCHRIFT FÜR IN-
DUSTRIELLE FERTIGUNG, Band 73, Nr. 6, Juni
1983, Seiten 371-372, Berlin, DE;
"Werkzeugwechselsystem für Schneidpressen"

MACHINERY AND PRODUCTION ENGINEE-
RING, Band 143, Nr. 3667, 20. März 1985,
Seite 91, Horton Kirby, Kent, GB; "Quick diechange system speeds press set up times"

V.D.I. Zeitschrift, Band 125, Nr. 11, Juni 1983,
Seiten 449-454, Düsseldorf, DE; W. HELLWIG:
"Stanzen mit hohen Hubzahlen"

(73) Patentinhaber: BRUDERER AG
Egnacher Strasse 44
CH-9320 Frasnacht-Arbon(CH)

(72) Erfinder: Helmut, Messner
c/o Firma Bruderer AG
CH-9320 Frasnacht(CH)

(74) Vertreter: Büchel, Kurt F., Dr. et al
Bergstrasse 297
FL-9495 Triesen(LI)

## Beschreibung

Es ist aus der DE-A- 30 36 333 eine Abgratpresse bekannt geworden, bei der die Presse ein gegenüber einem ortsfesten Werkzeug horizontal bewegliches Gegenwerkzeug aufweist. Der den Antrieb umfassende Lagerungskörper des Handhabungsgerätes sitzt an einer der Führungssäulen der Presse, die gleichzeitig als Antriebswelle ausgebildet ist, und ist jeweils schrittweise um je 90 Grad um diese Säule schwenkbar. Dabei überragen von insgesamt vier Greiferarmen je zwei in jeder der Stellungen die Umrisslinie. Von den vier Greiferarmen ist jeweils einer in einer Uebernahmestellung für ein von einer Druckgiessmaschine gefertigtes, abzugratendes Werkstück, einer in einer Einlegeposition zum Einlegen des Werkstückes in die Presse, und dazwischen ist eine Kühlposition und eine Ruhe- oder Leerposition vorgesehen.

Während bei Abgratpressen nur die relativ schwachen Grate der Werkstücke abzustanzen sind und dies im verhältnismässig langsamen Takt erfolgt, der durch die Druckgiessmaschine vorgegeben ist, sind die Verhältnisse bei höheren Geschwindigkeiten, insbesondere bei z.B. Stanzpressen, ganz andere. Dort sind nämlich oft dicke Bleche durchzustanzen, wobei dies unter Umständen mit sehr hohen Frequenzen geschieht.

Die Folge sind starke, auf alle Teile der Stanzpresse einwirkende Kräfte, die es bisher geraten sein liessen, von einer Anordnung von Handhabungsgeräten an der Presse abzusehen. Dazu kommt, dass bei Stanzpressen automatischer Art dafür zunächst auch kein Bedarf zu sein scheint, da ja die "Werkstücke" im Rohzustand, d.h. als Blech, durch einen Zuführmechanismus zugeführt werden, das fertige Werkstück aber im allgemeinen auch ohne Handhabungsgerät entfernt wird.

Was jedoch bei solchen und ähnlichen Pressen schwierig zu handhaben ist, sind die Werkzeuge selbst. Bisher gibt es am Markt zwei verschiedene Wechselsysteme. Entweder die Werkzeuge werden auf Rollenbahnen herausgehoben (denn ihr Gewicht ist meist beträchtlich), z.B. auf einen am Boden vor der Presse befestigten und die Ablage bildenden Drehtisch, der dort die Zugänglichkeit blockiert; oder das Werkzeug kommt mit einem Teil des tischartigen Gestelles heraus auf einen Wagen, der vor der Presse auf Schienen seitlich verfahrbar ist. Auch hier muss der Platz vor der Presse für diesen Wagen freigehalten werden, was besonders deshalb unangenehm ist, weil z.B. Stanzpressen, besonders bei höheren Stanzfrequenzen, oft von einem Schallschutzgehäuse umgeben werden, das dann für die Durchfahrt des Wagens, bzw. für die Uebernahme des Werkzeuges von diesem speziell ausgebildet sein muss.

Aus der JP-A-57 199 531 ist eine Presse gemäß dem Oberbegriff des Anspruchs 1 bekannt geworden, bei der an einem gemeinsamen Gestell sowohl die Presse selbst, als auch die Ablageeinrichtung für eine Mehrzahl von Werkzeugen untergebracht ist. Das jeweils gewünschte Werkzeug brauchte nur in eine Lage gegenüber dem Werkzeughalter gebracht werden, worauf ein von einem Zylinder betätigter Greiferarm es auf den Halter verschob. Entsprechend umgekehrt wurde bei der Entnahme des Werkzeuges verfahren.

Diese bekannte Ausführung schien zwar einfach und unkompliziert, hatte aber eine ganze Reihe von Nachteilen. Je höher nämlich die Produktionsgeschwindigkeit der Presse ist (von echten Hochgeschwindigkeitspressen gar nicht zu reden), desto stärkeren Erschütterungen mussten die Werkzeuge in der Ablageeinrichtung ausgesetzt sein. Da die Ablageeinrichtung einen komplizierten Bewegungsmechanismus nach Art eines Kreuzschlittens (und dies bei einer tonnenschweren Last der Werkzeuge) besass, wurde dieser bei höheren Stanzfrequenzen selbstverständlich bald ausgeleiert. Dazu kam, dass die Anzahl der in einer solchen Ablageeinrichtung unterzubringenden Werkzeuge naturgemäss äusserst beschränkt war. Ein weiterer Nachteil lag darin, dass die Zugänglichkeit zur Maschine (etwa für Wartungsarbeiten) sehr erschwert war, da ja die gesamte Rückseite der Presse, sowie zum Teil auch die Seiten, von der Ablageeinrichtung eingenommen wurde.

Der Erfindung liegt die Aufgabe zugrunde, eine kompakte Einheit zu schaffen, die es auch unter den bei schneller laufenden, insbesondere Stanzpressen gegebenen, besonderen Bedingungen gestattet, ein Handhabungsgerät anzuwenden, ohne dass hinsichtlich Zugänglichkeit der Presse Nachteile in Kauf genommen werden müssen.

Erfindungsgemäss wird diese Aufgabe durch die Massnahmen des Anspruches 1 gelöst.

Dadurch, dass der Greifarm nun auch hochhebbar ist, wird ein besonderer Nachteil der bekannten Schiebegreifer vermieden; denn das Werkzeug liess sich ja nur dann aus seiner Befestigung am Werkzeughalter herausschieben, wenn die - meist T-förmigen - Befestigungsschlitze oberhalb des Niveaus des Gestelles lagen. Es war daher eine besondere Bauhöhe für die Werkzeughalter vorzusehen, was einerseits Platzverschwendung bedeutete, andererseits auch die Zugänglichkeit nicht verbesserte. Aber auch für die Handhabung selbst war die reine Schiebebewegung ein Nachteil, weil sich hier Metallspäne des öfteren als Hindernis für die Schiebebewegung zeigten und einen unerwünschten Abrieb verursachten, zuweilen auch das Verschieben völlig hemmten.

Die Anordnung einer Zwischenstellung (Werkzeugentnahmelage) erlaubt es, die Ablageeinrichtung an einem weiter entferten Ort, d.h. also nicht unmittelbar am selben Maschinengestelle wie die Presse, unterzubringen, wodurch die Ablageeinrichtung

- beliebiger Grösse sein kann
- von Erschütterungen frei gehalten werden kann, und
- überdies die Zugänglichkeit zu ihr, sowie zur Presse verbessert wird.

Die Fachwelt hielt die Anbringung eines Handhabungsgerätes an einer Stanzpresse hoher Produktionsgeschwindigkeit auf Grund von sowieso schon schwierig zu beherrschenden Kräften an einer solchen Maschine bisher nicht für möglich und behielt deshalb die oben geschilderten Drehtisch- bzw. Wagen-Konstruktionen trotz ihrer Nachteile bei. Die erfindungsgemässe Konstruktion ermöglicht nun aber gerade doch eine solche Anbringung, wobei eine stabilere Lagerung gesichert ist, als dies beim Stande der Technik nach der DE-PS 30 36 333 der Fall war; überdies wird aber die Möglichkeit geschaffen, den Boden vor der Maschine frei zu bekommen. Falls ein Schallschutzgehäuse vorgesehen ist, wird dieses zumindest vereinfacht, da auf die Möglichkeit eines vorbeifahrenden, das Werkzeug aufnehmenden Wagens nicht mehr Rücksicht genommen werden muss. Der freie Raum vor der Stanzpresse erleichtert dabei ihre Zugänglichkeit. Schliesslich ist man auch nicht mehr an die räumlichen Verhältnisse für die Unterbringung des bekannten Drehtisches oder der Schienen für den Wagen gebunden, sondern erhält eine kompaktere Einheit, die weniger platzaufwendig ist, vielseitiger bei der Aufstellung der Stanzpresse und dazu auch weniger Gefahren mit sich bringt, da herumfahrende Wagen stets eine solche für das Personal bedeuten.

Wenn hier immer wieder von der "relativen Bewegung der beiden Haltevorrichtungen" die Rede ist, so soll damit zum Ausdruck gebracht werden, dass für den Stanzvorgang ja an sich nur die Relativbewegung der beiden Werkzeuge von Bedeutung ist und es daher möglich wäre, dass beide Werkzeuge zu einer Bewegung angetrieben sein könnten, obwohl in der Regel eines, meist das untere (bei vertikalem Bewegungsverlauf), ortsfest ist.

Es ist vorteilhaft, wenn die Stanzbewegung der relativ zueinander bewegbaren Haltevorrichtungen mittels Führungseinrichtungen - im Gegensatz zur genannten DE-PS aber in Uebereinstimmung mit der bei Stanzpressen üblichen Ausführung - in vertikaler Richtung geführt ist, und wenn dabei das Handhabungsgerät unterhalb der Haltevorrichtungen für das Stanzwerkzeug am Gestell gelagert ist. Angesichts der bei einer Stanzpresse auftretenden Schwingungen ist es nämlich besonders günstig, wenn auf diese Weise der Schwerpunkt der ganzen Einheit möglichst tief liegt.

Eben wegen der auftretenden Schwingungen ist es auch von Vorteil, wenn das Handhabungsgerät elastisch gelagert ist. Da aber Stanzpressen meist selbst schon elastisch gelagert sind, ist es günstig, wenn eine elastische Lagerung für Handhabungsgerät und Gestell gemeinsam vorgesehen und entsprechend der zusätzlichen, auf einer Seite sich ergebenden Belastung zu dimensionieren ist. Dabei kann es sich als zweckmässig erweisen, die elastische Lagerung unter dem Gestell an der dem Handhabungsgerät zugekehrten Seite stärker zu dimensionieren als an der gegenüberliegenden Seite.

Nun ist zwar einerseits die elastische Lagerung während des Betriebes der Presse, insbesondere bei Hochleistungspressen grosser Tourenzahl, sehr wichtig, andererseits führt sie beim Werkzeugwechsel unter Umständen dazu, dass sich der elastisch unterstützte Teil während der Bewegung des Handhabungsgerätes jeweils nach der schwereren Seite hin- und herneigt, was die Funktion - etwa beim Ablegen -tigen kann. Diesem Problem lässt sich bevorzugt dadurch abhelfen, dass eine Arretiereinrichtung zur Unterbindung einer elastischen Bewegung vorgesehen ist.

Während des Betriebes der Presse, während alle Teile den Schwingungen unterworfen sind, ist es günstig, wenn alle Teile möglichst nahe dem Schwerpunkt liegen, weshalb vorgesehen sein kann, dass wenigstens ein Greifarm in der Ruhelage (die er ja während des Pressenbetriebes einzunehmen hat) wenigstens mit seinem grösseren Teil innerhalb einer vom Querschnitt der Presse und dem Gehäuse bzw. dem Lagerungskörper des Handhabungsgerätes gebildeten Umrisslinie liegt.

Ein Problem bei Stanzpressen ist, wie schon erwähnt, der Lärm, der wegen der grossen aufzuwendenden Kräfte entsteht. Deshalb ist es vorteilhaft, wenn das Handhabungsgerät wenigstens in seiner Ruhelage, vorzugsweise auch zumindest in der Werkzeugentnahmelage und insbesondere in allen Lagen, innerhalb eines die Stanzpresse umgebenden Schallschutzgehäuses untergebracht ist. Befindet es sich nämlich nur in einer einzigen Lage mindestens teilweise, z.B. mit dem Greifarm, ausserhalb des Gehäuses, so muss dasselbe mit Türen, Schotts oder gar Durchreichöffnungen versehen werden, was einerseits das Gehäuse komplizierter macht, andererseits seinem Zweck abträglich ist.

Besonders vorteilhaft ist es, wenn auch die Ablageeinrichtung innerhalb des Schallschutzgehäuses untergebracht ist, weil dadurch nicht nur die Dichtheit dieses Gehäuses am besten gewährleistet ist, sondern auch die Wege für das Handhabungsgerät gering gehalten werden können, was wiederum seinem kompakten Aufbau förderlich ist. Ausserdem sind dann die Werkzeuge immer auf der innerhalb des Gehäuses herrschenden, meist erhöhten Temperatur gehalten, was sich auf die Präzision der Fertigung gleich von den ersten Fertigungsgängen an günstig auswirkt.

Zur weiteren Verbesserung der Stabilität während des Betriebs der Stanzpresse trägt es bei, wenn eine Spanneinrichtung vorgesehen ist, mit deren Hilfe der Greiferarm in der Ruhelage mit dem Gestell fest verbindbar ist. Dies kann beispielsweise so erfolgen, dass der Greiferarm von seinem, im allgemeinen fluidischen, Antrieb unter Spannung gehalten wird und gleichzeitig am jeweiligen ortsfesten, mit dem Gestell fest verbundenen Werkzeugteil angreift, so dass er zum Herausbewegen des Werkzeuges nicht erst aus einer besonderen Ruhelage an das Werkzeug herangebracht zu werden braucht.

Da viele Pressen sehr eng gebaut sind und zwischen den Führungseinrichtungen (meist Führungssäulen) für die Werkzeugbewegung wenig Platz zur Verfügung steht, ist es mit einer einfachen Schwenkbewegung des Greiferarmes meist nicht getan, weshalb es vorteilhaft ist, wenn wenigstens eine Schiebeführung für den Greifer vorgesehen ist und vorzugsweise der Lagerkörper als eine entlang des Gestelles und parallel zur Ebene der Haltevorrichtung verlaufende Schiebeführung ausgebildet ist. Bevorzugt ist der Greifer überdies um eine parallel zur Bewegungsrichtung der relativ zueinander bewegbaren Haltevorrichtungen für das Stanzwerkzeug verlaufenden Achse schwenkbar, insbesondere aus einer in die Stanzpresse ragenden Ruhelage in eine wenigstens annähernd entlang der Schiebeführungsbahn weisende Werkzeugentnahmelage. Dabei kann sehr engen Platzverhältnissen dadurch Rechnung getragen werden, dass eine der Schiebe- und der Schwenkbewegung zugeordnete gemeinsame Steuervorrichtung vorgesehen ist, durch die der Greifer im wesentlichen entlang einer geraden Linie zwischen Führungssäulen der Presse in die Werkzeugentnahmelage bewegbar ist.

Wenn der Greifarm mit Hilfe einer Schiebeführung parallel zur Ebene der Haltevorrichtungen für das Werkzeug verschiebbar geführt ist, sind in dieser Ebene zwei Richtungen möglich: entweder ist der Greiferarm, z.B. durch eine Teleskopführung, im Falle einer Stanzpresse quer zur Zufuhrrichtung des zu stanzenden Bleches bewegbar und/oder, was bevorzugt ist, parallel dazu. In diesem letzteren Fall ist die Schiebeführung vorzugsweise zum Verschieben des gesamten Handhabungsgerätes am Gestell befestigt. Wenn dann der Greifer überdies um eine parallel zur Bewegungsrichtung der relativ zueinander bewegbaren Haltevorrichtungen für das Stanzwerkzeug verlaufende Achse schwenkbar ist, so kann das Herausziehen des Werkzeuges durch Verschieben und gleichzeitiges Schwenken erfolgen. Hiefür ist durch die Steuereinrichtung eine derartige Koordinierung dieser beiden Bewegungen vorgesehen, dass das freie Ende des Greiferarmes, vor allem aber das Werkzeug selbst, sich entlang einer Geraden bewegt, bevor er in die Werkzeugentnahmelage gelangt. Die Programmsteuereinrichtung kann - insbesondere bei einem rein mechanischen Antrieb - auch aus einer blossen Koppelung der beiden Antriebe bestehen. Es ist bevorzugt, wenn dabei der Greiferarm aus einer in die Stanzpresse ragenden Ruhelage in eine wenigstens annähernd entlang der Schiebeführungsbahn weisende Werkzeugentnahmelage bringbar ist, weil dann der Greiferarm auch weiterhin die Umrisslinie der Stanzpresse und seines Lagerkörpers nicht überragt. Da er die Werkzeugentnahmelage selbstverständlich nur bei stillstehender Stanzpresse einnimmt (weshalb es vorteilhaft ist, eine Koppelung der Steuerung des Pressen- und des Geräteantriebes in dem Sinne vorzusehen, dass immer nur der eine oder der andere eingeschaltet ist), ist das zuletzt genannte Merkmal nicht wegen der Maschinenschwingungen wichtig, sondern weil dadurch (ohne Schallschutzgehäuse) das Personal weniger durch den Greiferarm gefährdet ist und auf ihn achten muss bzw. weil (im Falle eines Schallschutzgehäuses) sich eine kompaktere Gestaltung ergibt, die ein kleineres und damit billigeres Schallschutzgehäuse ermöglicht.

Bei Stanzpressen gibt es selbstverständlich immer wieder Stanzabfälle. Wegen der hohen Betriebsfrequenz ist es - im Gegensatz etwa zu einer Abgratpresse - nicht möglich, diese Abfälle etwa von Hand aus zu beseitigen; dem stehen auch die beengten Platzverhältnisse in einer Stanzpresse entgegen. Daher ist es leicht möglich, dass sich derartige Abfälle zwischen die Aufspannfläche der Haltevorrichtung und das Werkzeug schieben, falls eine reine Schiebebewegung für den Greiferarm vorgesehen wäre. Es ist deshalb von Vorteil, wenn auch eine parallel zur Ebene der Haltevorrichtung für das Stanzwerkzeug verlaufende Achse für den Greiferarm vorgesehen ist, mit deren Hilfe das jeweilige Stanzwerkzeug von seiner Unterlage abhebbar ist.

Herkömmliche Handhabungsgeräte zur Entnahme von Werkstücken besitzen meist bewegbare Greiferklauen. Selbstverständlich ist eine solche Konstruktion im Rahmen der Erfindung ebenfalls möglich, doch kann die Konstruktion vereinfacht und verbilligt werden, wenn der Greiferarm an seinem freien Ende nur einen Bügel, Zapfen od.dgl. des jeweiligen Werkzeuges umfassenden Haken besitzt, bevorzugt überdies eine das durch das Gewicht des Werkzeuges bedingte Schwenkmoment aufnehmende, etwa senkrecht zur Ebene des Werkzeuges verlaufende Stützfläche.

Die Anbringung einer Oese, Griffmulde od.dgl. an einem Werkzeug selbst erfordert zusätzliche Bearbeitungskosten, ist nicht immer tunlich und wird auch bei den Anwendern nicht gerne durchgeführt. Deshalb ist es zweckmässig, hiefür ein getrenntes Aufnahmegerät zu schaffen; dieses soll zum Zusammenwirken mit dem Greiferarm geeignet sein, weshalb es vorzugsweise so ausgebildet ist, dass es als Adapter zum Handhaben unterschiedlicher Werkzeuge eine Befestigungsanordnung für das jeweilige Werkzeug aufweist, die zumindest eine Befestigungsfläche umfasst, und dass ein sich von dieser Befestigungsanordnung weg erstreckender Bügel vorgesehen ist, der mit einem - nach Befestigung am Werkzeug - parallel zu dessen Kante verlaufenden Halteabschnitt versehen ist.

Weitere Einzelheiten ergeben sich an Hand der nachfolgenden Beschreibung von in der Zeichnung schematisch dargestellten Ausführungsbeispielen. Es zeigt

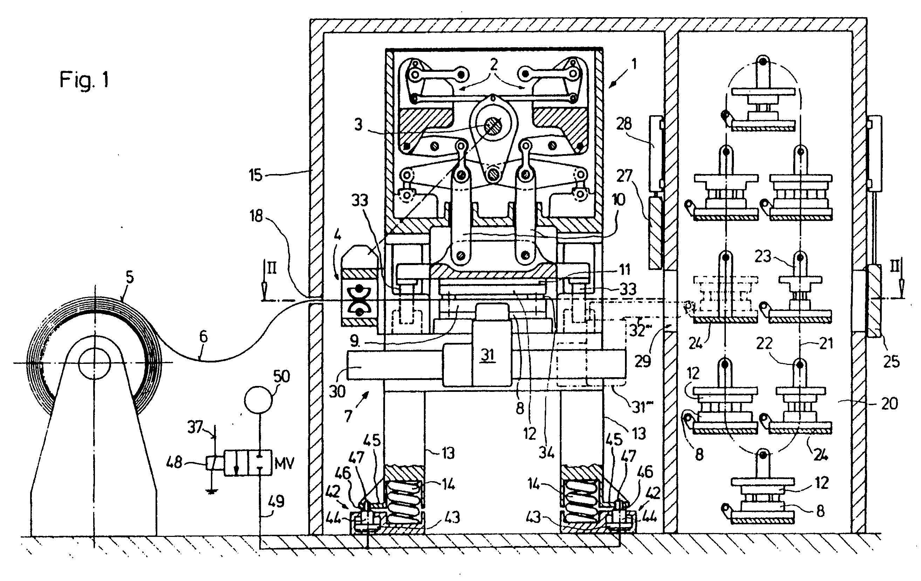

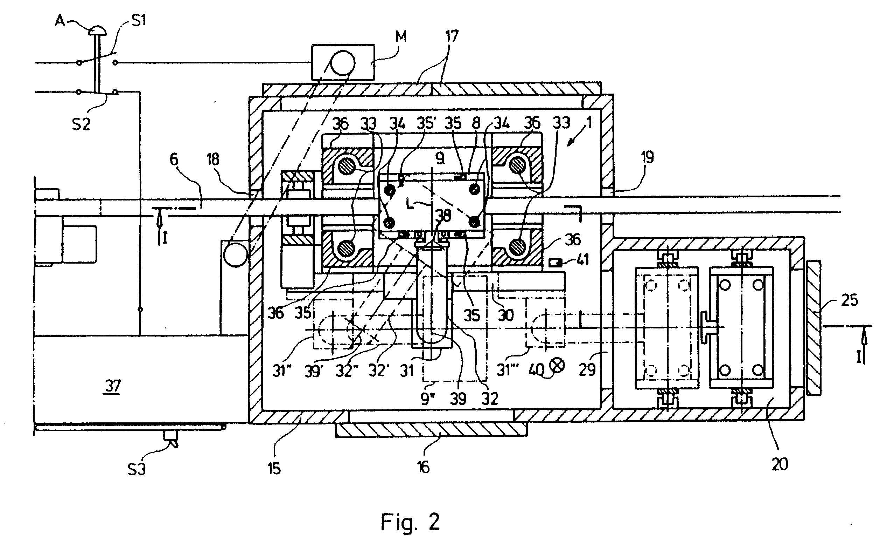

Fig. 1          einen Längsschnitt durch das Schallschutzgehäuse einer Hochfrequenzpresse samt einer angeschlossenen Werkzeugablage nach der Linie I-I der Fig. 2, wobei Teile der Presse und der Ablage ebenfalls geschnitten sind und ein Handhabungsgerät an der Presse mit seiner Schiebeführung gezeigt ist;

Fig. 2          ist ein Querschnitt durch das Schallschutzgehäuse nach Fig. 1 entlang der Linie II-II, wobei Teile der Presse geschnitten sind, um die Arbeitsweise des Handhabungsgerätes beim Werkzeugwechsel zu veranschaulichen; die

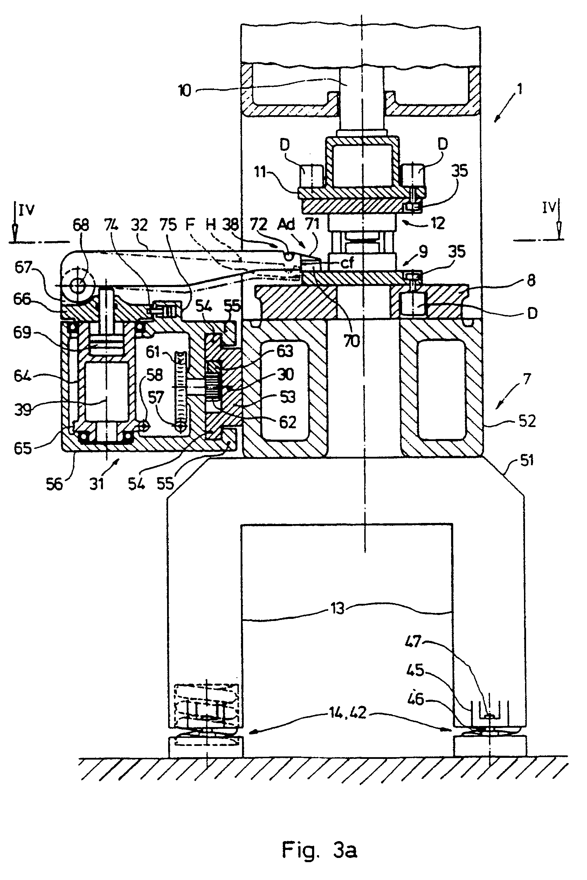

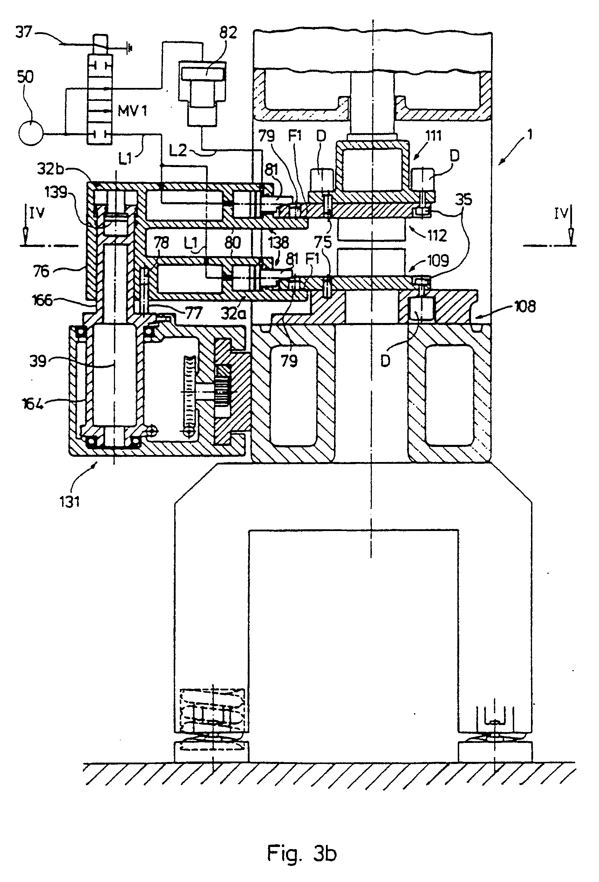

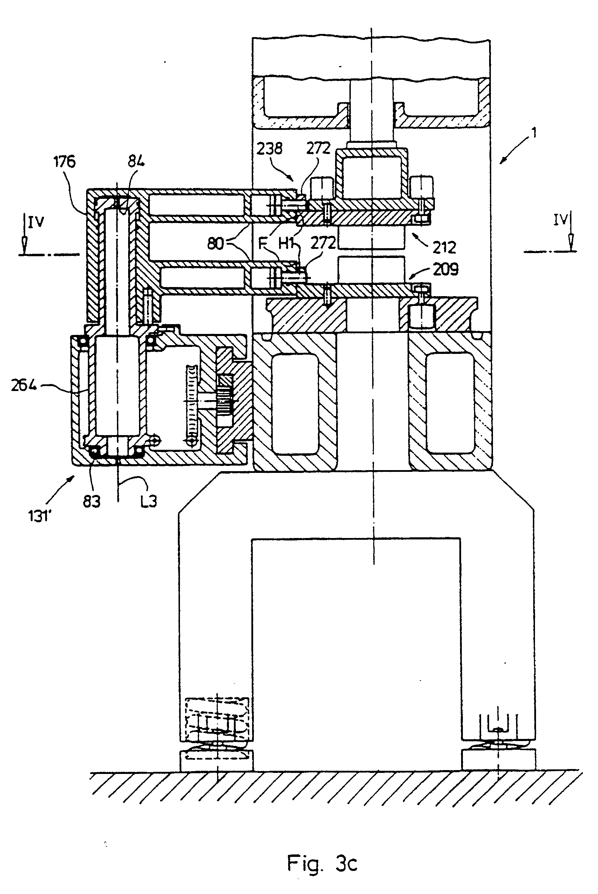

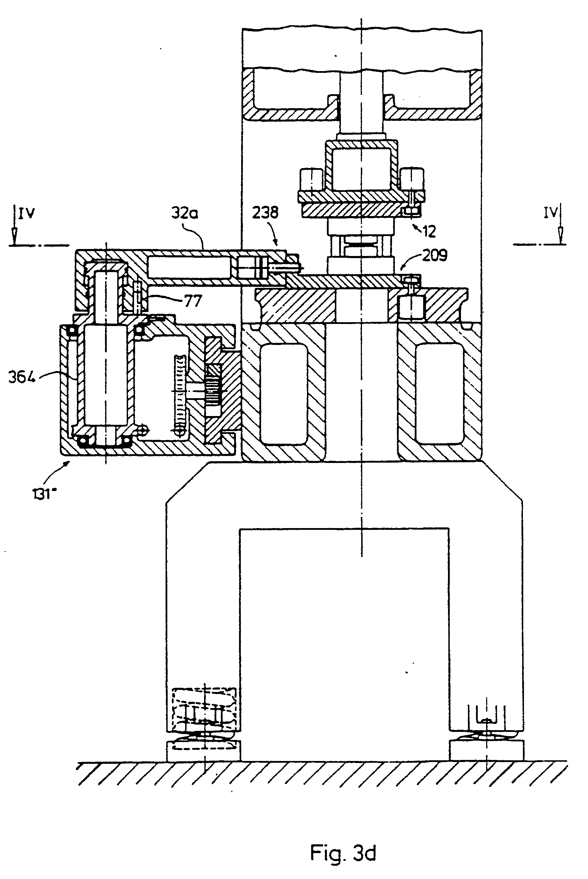

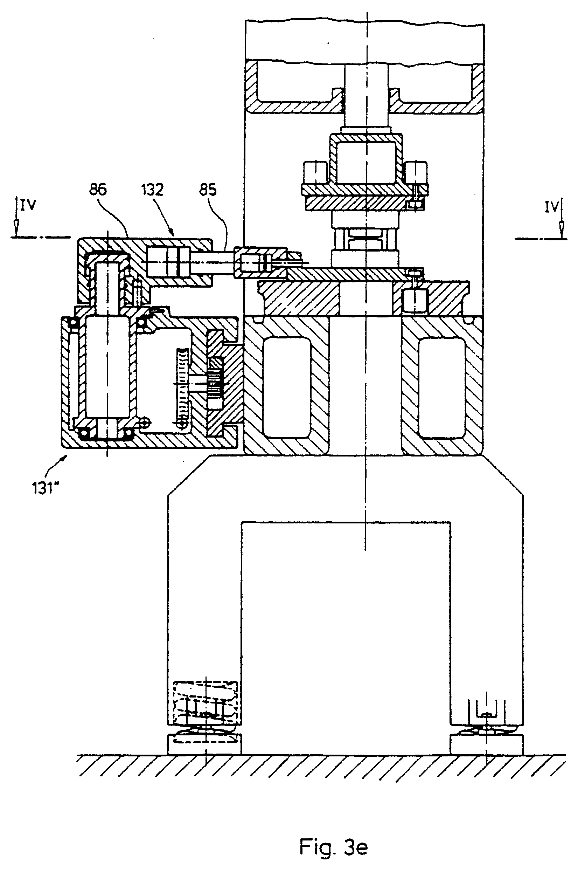

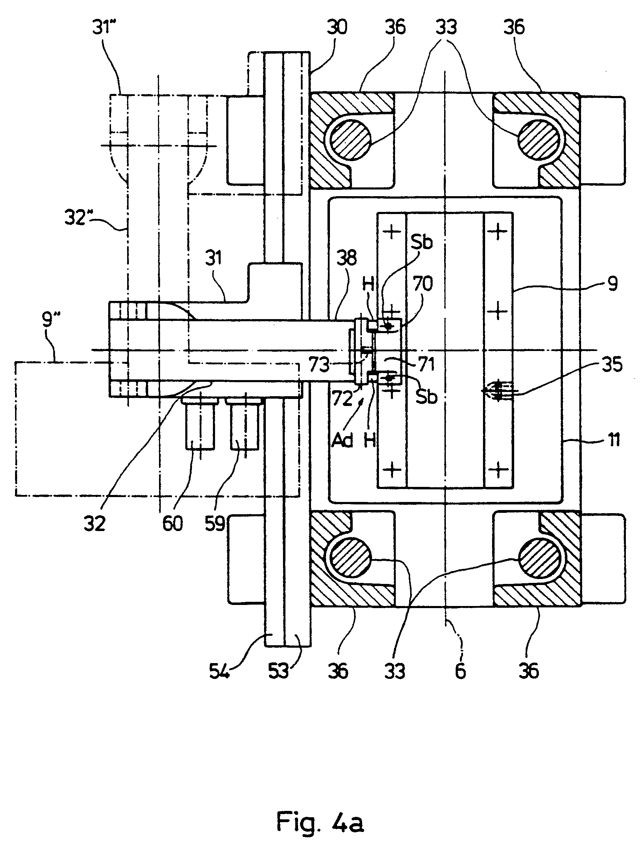

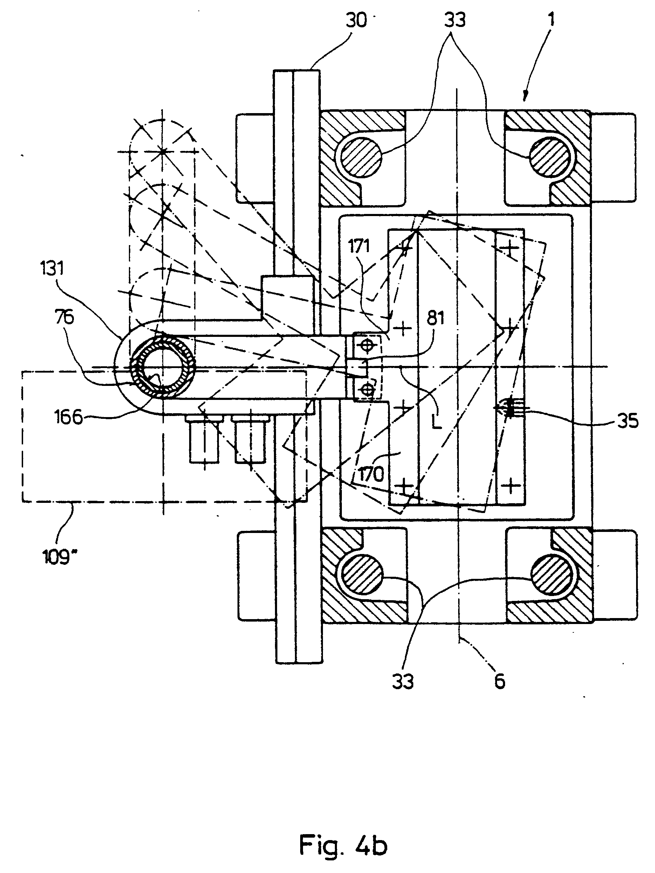

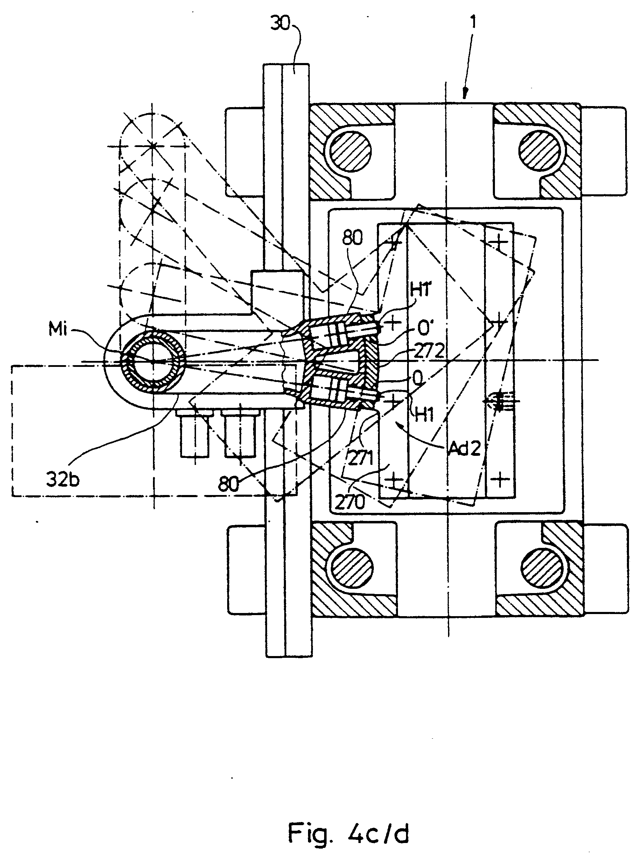

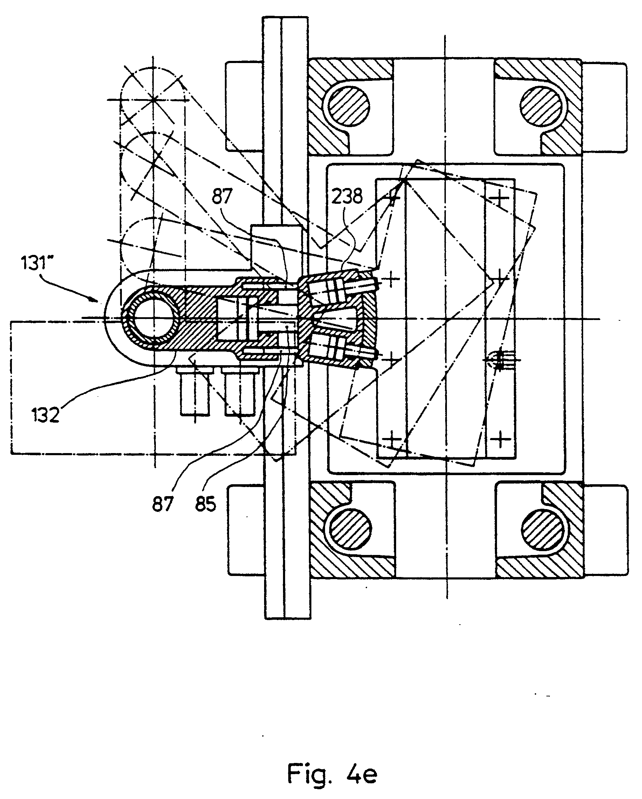

Fig. 3a bis 4e  zeigen verschiedene Ausführungsformen des Handhabungsgerätes, wobei die Kleinbuchstaben jeweils zusammengehörige Ansichten eines Ausführungsbeispieles kennzeichnen und jede Fig. 3 ein Querschnitt durch den Lagerungskörper des Handhabungsgerätes und die Presse, die zugehörige Fig.4 gleichen Buchstabens eine Draufsicht auf das Handhabungsgerät und im Schnitt nach der jeweiligen Linie IV-IV durch die Presse ist.

In den Fig. 1 und 2 ist eine Hochfrequenz-Stanzpresse 1 dargestellt, an der die Erfindung bevorzugt angewendet wird, weil die hohe Produktionsgeschwindigkeit bei solchen Pressen rascher einen Werkzeugwechsel erforderlich macht und deshalb in dieser Hinsicht ein Problem darstellt. Die Ausbildung als Hochfrequenz-Stanzpresse ist daran kenntlich, dass Ausgleichsgewichte 2 mit einem Exzenterantrieb 3 verbunden sind, der übrigens auch einen Zufuhrantrieb 4 für das auf einer Bandrolle oder Coil 5 aufgewickelte Stanzblech 6 antreibt, wie dies strichpunktiert angedeutet ist. Die Ausgleichsgewichte 2 sind gemäss der Darstellung so angeordnet, wie dies bereits in der US-A 4 156 387 beschrieben worden ist, doch versteht es sich, dass hiefür auch jede andere Anordnung verwendet werden kann.

Die Stanzpresse 1 ruht auf einem Gestell 7, auf dem eine Haltevorrichtung 8 für ein ortsfestes Stanzwerkzeug 9 montiert ist. Durch den Exzenterantrieb 3 wird über Stössel 10 eine bewegliche Haltevorrichtung 11 in vertikaler Richtung auf- und abbewegt, an der ein bewegliches Gegenwerkzeug 12 befestigt ist. Es versteht sich, dass es dabei nur auf die Relativbewegung der beiden Werkzeuge 9,12 ankommt, und dass ebensogut das obere ortsfest und das untere beweglich sein könnte, wie es auch denkbar wäre, beide beweglich auszubilden. Auch ist die vertikale Anordnung zwar bevorzugt, weil die von der Stanzpresse 1 ausgehenden Stösse in den Boden abgeleitet werden, doch ist die Erfindung darauf nicht beschränkt.

Da diese Stösse bei Hochfrequenz-Stanzpressen sehr stark sind, ist im allgemeinen das Gestell 7 elastisch gelagert. Hiezu sind in den vier Beinen 13 des Gestelles 7 (nur zwei sind in Fig. 1 sichtbar) Stützfedern 14 eingebaut. Die Funktion dieser Federung für die Zwecke der Erfindung wird später noch erläutert.

Zweckmässig ist die Stanzpresse 1 in einem Schallschutzgehäuse 15 untergebracht, das über eine Türe 16 (Fig. 2) von der Rückseite her zugänglich ist und an der Vorderseite über einen Eingang 17 betreten werden kann. Ueber schmale Oeffnungen 18, 19 tritt das Stanzblech 6 ein bzw. aus. Aus Fig. 2 ist übrigens auch der die Antriebe 3 und 4 betreibende Motor M ersichtlich.

Die bisher beschriebenen Teile sind an einer Hochfrequenz-Stanzpresse herkömmlicher Natur. Es versteht sich, dass die Erfindung keineswegs nur auf solche Pressen beschränkt ist, dort aber bevorzugt zur Anwendung gelangt, weil hier die durch die Erfindung zu lösenden Probleme auf Grund der hohen Produktionsgeschwindigkeit, der raschen stossweisen Bewegung und der Beengtheit in einem Schallschutzgehäuse 15 besonders verschärft sind.

Eben wegen der hohen Produktionsgeschwindigkeit wird es erforderlich sein, die Werkzeuge 9,12 häufig zu wechseln, wenn mit einer solchen Presse 1 auch kleinere Stückzahlen auf ein Mal hergestellt werden sollen. Ist dabei der Werkzeugwechsel problematisch, wie dies bisher der Fall war, so ist es nötig, mit dem einmal an den Haltevorrichtungen 8,11 (die übrigens von jeder beliebigen bekannten Bauart sein können) befestigten Werkzeugen eine grosse Stückzahl anzufertigen, die dann erst nach und nach dem Kunden geliefert werden kann, in der Zwischenzeit Lagerkosten verursacht und das eingesetzte Kapital bindet.

Deshalb ist in einem Nebenabteil 20 des Isoliergehäuses 15 ein Werkzeugmagazin untergebracht, in dem Werkzeuge 9 und Gegenwerkzeuge 12 verschiedenster Art übereinander auf einer Umlaufkette 21 (in Fig. 1 nur angedeutet) an Achsen 22 und daran über Traghebel 23 aufgehängten Paletten 24 abgelegt sind.

Innerhalb des Abteils 20 für die Werkzeugablage kann eine (nicht dargestellte) Heizeinrichtung vorgesehen sein, um die Werkzeuge 9,12 ständig auf der Arbeitstemperatur zu halten, da beim Stanzvorgang schon durch relativ geringe Temperaturunterschiede die Präzision beeinträchtigt werden kann. Aus diesem Grund ist das Abteil 20 zweckmässig nach allen Seiten abgeschlossen und isoliert, wobei ein Zugang von aussen nur durch eine Schiebetüre 25 möglich ist, die beispielsweise durch ein Zylinderaggregat 26 verschiebbar ist. Analog dazu ist eine zur Stanzpresse 1 zu öffnende Türe 27 mit einem Zylinderaggregat 28 vorgesehen, die eine Oeffnung 29 abschliesst.

Um nun die sehr schweren Werkzeuge 9,12 leicht und rasch auswechseln zu können, ist am Gestell 7 der Presse 1 ein Lagerkörper 30 zum Lagern eines Handhabungsgerätes 31 befestigt. Das Handhabungsgerät 31 besitzt einen aus Fig. 2 ersichtlichen Greifarm 32, mit dem wenigstens ein Werkzeug 9 bzw. 12 aus der Stanzpresse entnommen werden kann, sobald es von seinen Haltevorrichtungen 8 bzw. 11 gelöst ist. Hiezu ist es nötig, einige Besonderheiten solcher Werkzeuge zu erläutern.

Die bewegbare Haltevorrichtung 11 ist an den Seiten von vier an ihr befestigten und mitbewegten Führungssäulen 33, überdies sind aber noch Führungssäulen 34 an den Werkzeugen 8,12 vorgesehen. Im Betrieb der Presse 1 wird das jeweilige Werkzeug 9 bzw. 12 auf seiner Haltevorrichtung 8 bzw. 11 mittels einer lösbaren Befestigungseinrichtung, beispielsweise mittels verdrehbarer Spannbacken 35 festgehalten, von den in Fig.2 drei im gelösten, d.h. vom Werkzeug 9 weggedrehten Zustand gezeigt sind, wogegen die Spannbacke 35' das Werkzeug 9 noch übergreift und festhält.

Da beide Werkzeuge 9,12 gemeinsam abgelegt werden sollen, kann das Handhabungsgerät beide gemeinsam samt den Säulen 34 ergreifen und muss sie dann (nach Lösen der Spannbacken 35) aus dem engen Raum zwischen den die Führungssäulen 33 umgebenden Gestellteilen 36 herausbefördern. Nun wäre dies an sich dadurch möglich, dass das Vorderende des Greifarmes um zwei Gelenke des Armes so bewegt wird, dass es sich wenigstens annähernd entlang einer Geraden bewegt. Der Greifarm müsste also durch ein Gelenk in zwei Teile geteilt sein und sich überdies an seinem dem Lagerkörper 30 zugekehrten Ende noch um ein weiteres Gelenk drehen.

Es ist günstig, wenigstens eine Schiebeführung vorzusehen. Diese kann eine Teleskop-Führung sein oder eine solche Führung, wie sie später an Hand der Fig. 3e,4e beschrieben wird; bevorzugt ist jedoch der Lagerkörper 30 selbst als Schiebeführung ausgebildet. Das Handhabungsgerät 31 ist dieser Schiebeführung 30 entlang verschiebbar ausgebildet, und zwar parallel zur Ebene der Haltevorrichtung 9,11 bzw. senkrecht zur Bewegungrichtung des beweglichen Werkzeuges 12 und seiner Haltevorrichtung 11. Dadurch dass der Lagerkörper 30 am Gestell 7 sitzt, liegt sein Schwerpunkt relativ tief, wenn gleichzeitig die Stanze mit vertikaler Bewegungsrichtung arbeitet. Andererseits ermöglicht es die Lagerung am Gestell 7, den Boden unterhalb des Gerätes 31 fussfrei zu halten, so dass eine Bedienungsperson nahe genug an die Presse 1 herankann.

Entlang einer solchen Schiebeführung 30 ist das Handhabungsgerät 31 gemäss den Darstellungen der übrigen Figuren mittels eines eingebauten Motors oder mit Hilfe einer entlang der Schiebeführung 30 verlaufenden Spindel (nach Art einer Drehbank) verschiebbar ausgebildet, wobei sein Greiferarm 32 durch einen weiteren, ebenfalls an Hand der Fig. 3,4 erläuterten Antrieb in der aus Fig. 2 ersichtlichen Weise verschwenkbar ist. Mit Hilfe einer solchen Schiebeführung 30 ist es möglich, für diese beiden Antriebe eine gemeinsame Steuereinheit, z.B. mit einem Mikroprozessor, in einem Steuerschrank 37 anzuordnen (vgl.Fig.2), die die Schiebebewegungen des Handhabungsgerätes 31 und die Schwenkbewegungen seines Greiferarmes 32 derart steuert,wie es nachstehend an Hand der Fig.2 beschrieben ist.

Mit vollen Linien ist in Fig. 2 jene Stellung des Handhabungsgerätes 31 gezeigt, die es während des Betriebes der Presse 1 einnimmt, während also das Handhabungsgerät selbst in Ruhe ist. Es ist wichtig, dass das Handhabungsgerät nicht während des Betriebes der Presse 1 eingeschaltet wird. Deshalb ist es zweckmässig, eine entsprechende Sicherungseinrichtung vorzusehen. Diese kann beispielsweise so ausgebildet sein, dass das Handhabungsgerät nur durch Betätigen zweier Einschaltknöpfe eingeschaltet werden kann, um ein unwillkürliches Einschalten in ähnlicher Weise zu verhindern, wie dies beim Schalten von Aufnahmeköpfen bei Magnettongeräten geschieht. Eine andere Möglichkeit besteht darin, eine mechanische oder elektrische gegenseitige Verriegelung der Schalter vorzusehen. Dies kann am einfachsten in der an Hand der Fig. 2 gezeigten Art geschehen, wo ein Haupschalter S1 für den Pressenmotor M über ein einziges Betätigungsorgan A so mit einem Bereitschaftsschalter für die Programmsteuerung 37 des Handhabungsgerätes 31 verbunden ist, dass ein Einschalten des einen Schalters gleichzeitig ein Ausschalten des anderen Schalters bedeutet.

Sobald die Schalter S1, S2 in der in Fig. 2 gezeigten Lage sind, kann das Handhabungsgerät 31, zweckmässig über einen weiteren, in Serie zum Schalter S2 liegenden Schalter S3, in Tätigkeit gesetzt werden. Es zeigt sich nun, dass die mit vollen Linien gezeigte Ruhelage des Handhabungsgerätes einen doppelten Zweck erfüllt. Dadurch, dass der Greiferarm 32 während des Betriebes der Presse 1 dem Inneren der Presse zugekehrt ist, wobei er mit seinem grössten Teil bzw. zur Gänze innerhalb der durch die Umrisslinien der Presse und des Handhabungsgerätes gegebenen gemeinsamen Umrisslinien liegt, ist gesichert, dass der Greiferarm 32 nicht durch die Erschütterungen der Presse 1 zu starken Momenten ausgesetzt ist, was der Fall wäre, wenn er etwa in die entgegengesetzte Seite, d.h. bezüglich Fig. 2 nach unten ragen würde. Damit muss keineswegs eine Behinderung des Pressenantriebes verbunden sein, wie später noch an Hand der Fig. 3 und 4 beschrieben wird.

Ein weiterer Vorteil liegt darin, dass dadurch auch die Belastung der elastischen Lagerung 14 (vgl.Fig.1) gleichmässiger ist, was für eine wirkungsvolle Dämpfung wichtig ist, weil durch das Handhabungsgerät 31 sowieso zusätzliches Gewicht auf die diesem zugekehrten beiden Gestellbeine 13 wirkt, so dass es zweckmässig sein kann, dort die Federn 14 stärker als an der dem Eingang 17 zugekehrten Seite auszubilden. Schliesslich ist aber durch die dargestellte Ruhelage gesichert, dass das Handhabungsgerät im Moment des Einschaltens sofort zu arbeiten beginnen kann, ohne erst zum Werkzeug 9 bzw.12 geführt werden zu müssen.

Nach dem Einschalten des Handhabungsgerätes 31 beginnt nun eine derartige koordinierte Bewegung des Schiebe- und des Schwenkantriebes, dass der am Ende des Greiferarmes 32 vorgesehene Greifer 38 innerhalb einer sich etwa entlang einer geraden Linie L erstreckenden Bahn (mit den aus Fig. 2 ersichtlichen leichten Abweichungen) bewegt. Dabei verschiebt sich die Schwenkachse 39 des Greiferarmes 32 entlang der Schiebeführung 30 in die Stellung 39′, während der Greiferarm 32 in die Stellung 32′ schwenkt, sodass das von ihm ergriffene Werkzeug 9 an der Linie L genau in der Mitte zwischen den Gestellteilen 36 bleibt. So kann trotz beengter Verhältnisse und einfachstem und robustem Aufbau des Handhabungsgerätes das Herausziehen bzw. -heben des Werkzeuges 9 bzw.12 bewerkstelligt werden. Am Ende der Bewegung ist das Werkzeug 9 in einer Werkzeugentnahmelage 9″, während das Handhabungsgerät 31 entlang der Schiebeführung 30 die Position 31″ erreicht hat und der Greiferarm die Lage 32″ einnimmt.

Hier wird nun ersichtlich, dass die Anordnung der Werkzeugablage im Abteil 20 insoferne optimal ist, als der Greiferarm 32 in der Werkzeugentnahmelage 32″ parallel zur Schiebeführung 30 liegt, so dass das Werkzeug 9 einerseits knapp an den Gestellbeinen 36 vorbei zur Ablage gelangen kann, andererseits das Werkzeug auch nicht so weit über das Pressengestell hinausragt, dass es Bedienungspersonen behindert oder gar eine Erweiterung des Schallschutzgehäuses 15 erforderlich macht.

Die für diese Bewegungskoordination erforderliche Steuerung ist eine Programmsteuerung beliebiger und im übrigen an sich bekannter Art. Wenn es sich um eine Schrittsteuerung handelt, kann mit einem Mindestmass an Positionsgebern das Auslangen gefunden werden, da jede Stellung von der Anzahl der Schritte ab Anlauf des Programmes abhängt.

Wenn daher das Handhabungsgerät im weiteren Verlauf aus der Wekzeugentnahmelage 31″ entlang der Schiebeführung 30 nach rechts (bezogen auf Fig.2) verfahren wird, so erreicht es schliesslich eine Werkzeugübergabelage 31‴. Zuvor ist es aber nötig, dass die Oeffnung 29 freigegeben wird, d.h. dass die Türe 27 in die aus Fig.1 ersichtliche Lage kommt. Hiezu kann die Ansteuerung des Zylinderaggregates in die Schrittsteuerung eingebunden sein, so dass beim Schritt das Handhabungsgerät 31 eine Position einnimmt, in der das Werkzeug kurz vor der Türe 27 steht und gleichzeitig die Türe 27 geöffnet wird. Es kann aber auch ein Positionsgeber, z.B. mit einer Lichtquelle 40 und einem Photoempfänger 41 einer von der Steuerung 37 getrennten Steuerung für die Türe 27 zugeordnet sein, wobei im Augenblick, in dem das Werkzeug 9, der Greiferarm 32 oder der Körper des Handhabungsgerätes 31 den Strahl der Lichtquelle 40 durchläuft, die Türe 27 geöffnet wird.

Die Werkzeugablage innerhalb des Abteils 20 ist nun zweckmässig nach Art einer Liftsteuerung ausgebildet, so dass die Paletten 24 stets vorbestimmte Stellungen einnehmen und so das Werkzeug mit Sicherheit auf sie gelangt (vgl. die Werkzeugübergabelage in Fig.1). Wenn nun besonders schwere Werkzeuge mit Gewichten bis zu einer Tonne bewegt werden sollen, kann die Federung 14 eine entscheidende Störquelle darstellen. Andererseits ist es wichtig, dass das Handhabungsgerät selbst nicht allzu harten Stössen ausgesetzt ist, weswegen die elastische Lagerung auch dann zweckmässig wäre, wenn es sich nicht um eine Hochfrequenz-Stanzpresse handelte, wobei die elastische Lagerung zwischen Gestell 7 und Lagerkörper 30 vorgesehen sein könnte. Es ergibt sich somit das Problem, wie einerseits eine elastische Lagerung bereitgestellt werden kann und andererseits ihre möglichen nachteiligen Auswirkungen vermieden werden können, falls tatsächlich so schwere Werkzeuge gehandhabt werden müssen.

Die Lösung kann in der in Fig.1 gezeigten Arretiereinrichtung liegen, die nach Art einer Waagenarretierung gewünschtenfalls eine (elastische) Bewegung des Gestelles und damit des Lagerkörpers 30 samt Handhabungsgerät 31 verhindert und so sichert, dass der Greiferarm 32 stets eine Uebergabeposition 32" in derselben Höhe einnimmt, die der Lage einer Palette 24 entspricht.

Die Arretiereinrichtung kann nun so ausgebildet sein, dass zwischen dem Boden und den von den Federn 14 elastisch gehaltenen Beinen 13 des Gestelles 7 Zylinderaggregate 42 vorgesehen sind, deren Kolben 43 während des Betriebes der Presse 1 die in Fig.1 gezeigte Lage einnehmen. Derartige Zylinderaggregate 42 können nur an der dem Handhabungsgerät 31 zugekehrten Seite an zwei Beinen 13 oder an allen Beinen des Gestelles 7 vorgesehen werden. Jeder Kolben 43 besitzt eine Kolbenstange 44, die ausserhalb des Zylinders 42 eine gegen einen Fortsatz 45 des zugeordneten Gestellbeines 13 gerichtete Stützfläche 46 aufweist, von der zweckmässig (jedoch nicht notwendigerweise) ein Führungsbolzen 47 nach oben zu absteht und eine Führungsöffnung im Fortsatz 45 durchsetzt. Wird nun die Presse 1 durch Oeffnen des Schalters S1 (Fig. 2) abgeschaltet und der Schalter S2 geschlossen, so kann sofort oder erst nach Einschalten des Schalters S3 (was bevorzugt ist) der Magnet 48 eines Magnetventiles MV vom Steuergerät 37 aus erregt werden. In der gezeigten Stellung des Magnetventiles MV ist eine Leitung 49 unterbrochen, die die Zylinderaggregate 42 mit einer Druckmediumquelle 50 verbinden soll. Wird dagegen das Magnetventil (bezogen auf Fig.1) nach rechts bewegt, so wird die Verbindung zur Druckmediumquelle 50 freigegeben, worauf sich die Kolben 43 nach oben schieben. Dabei legen sich ihre Stützflächen 46 gegen die Unterseite der Fortsätze 45 und tragen so unmittelbar die Beine 13, so dass die Federn 14 entlastet sind. Dadurch sind die Beine 13 arretiert und können nun keine elastische Bewegung mehr ausführen, wobei die Uebergabestellung 32" des Greiferarmes 32 in ihrer Höhe gesichert ist.

Zweckmässige Ausbildungen des Handhabungsgerätes 31 werden nachstehend an Hand verschiedener Ausführungsformen a) bis e) besprochen, die in verschiedenen Fig.3 und 4 gezeigt sind, wobei Teile gleicher Funktionen dieselben Bezugszeichen, jedoch mit einer hinzugefügten Hunderterziffer besitzen.

Bei der Ausführungsform a) gemäss den Fig.3a und 4a ist ersichtlich, dass das Gestell 7 aus einem mit den Beinen 13 versehenen Bock 51 und einem Lagerbrett 52 besteht. Auch sind die in der Haltevorrichtung 8 bzw.11 angeordneten Antriebe D für die (hier allerdings in Ausnehmungen des Werkzeuges eingreifenden) Spannbacken 35 dargestellt, von welchen Spannbacken allerdings nur je eine gezeigt ist.

Ferner ist ersichtlich, dass der Lagerkörper 30 als T-Führung ausgebildet ist, und dass daher von einem mit dem Lagerbrett 52 verbundenen Befestigungskörper 53 nach oben und unten, T-förmig, Fortsätze 54 abstehen. Diese Fortsätze 54 werden von Führungsansätzen 55 des Handhabungsgerätes 31 umgriffen. Die Ansätze 55 ragen von einem Gehäuse 56 vor, in dem die Antriebsteile des Handhabungsgerätes 31 untergebracht sind. Obwohl hier der Einfachheit halber eine Gleitführung 54,55 dargestellt ist, können gewünschtenfalls an einzelnen Flächen Rollen vorgesehen sein.

Für den Verschiebeantrieb des Handhabungsgerätes für die Bewegung entlang der Schiebeführung 30 (siehe die obige Beschreibung an Hand der Fig.1 und 2) kann das Gehäuse 56 einen eigenen Motor beinhalten, in welchem Falle allerdings eigene Stromversorgungskabel nachgeführt werden müssen. Günstiger ist es, eine durchgehende Spindel nach Art einer Drehbank von einem ortsfesten Motor aus anzutreiben. Eine solche Spindel könnte die Spindel 57 (Fig.3a) sein. Anderseits kann diese Spindel 57 sowie eine ähnliche Spindel 58 jeweils von einem Antriebsaggregat 59 bzw.60 (Fig.4a) angetrieben werden.

Mit der Spindel 57 steht ein im Gehäuse 56 gelagertes Schraubenrad 61 im Eingriff, an dessen Achse ein Ritzel 62 im Eingriff mit einer an der Schiebeführung 30 vorgesehenen Zahnstange 63 ist. Auf diese Weise wird also die Verschiebebewegung angetrieben.

Zur Erzielung der oben bereits beschriebenen Schwenkbewegung um die Schwenkachse 39 (vgl. Fig.2) ist eine Hohlwelle 64 vorgesehen, die an ihrem unteren Ende ein mit der Spindel 58 im Eingriff stehendes Schraubenrad 65 besitzt. An ihrem oberen Ende trägt die Hohlwelle 64 einen Drehteller 66, der mit Lagerwangen 67 für die Aufnahme einer in der Ebene der Haltevorrichtungen 8,11 bzw. parallel zu derselben verlaufenden Schwenkachse 68 versehen ist. Somit ist der Greiferarm 32 einerseits um die Achse 39 und anderseits um die horizontale Achse 68 auf- und abschwenkbar. Für diese Auf- und Abbewegung ist innerhalb der Hohlwelle 64 ein Kolben 69 verschiebbar, dem - unter Steuerung durch das Steuergerät 37 - Druckmedium aus einer Druckquelle, z.B. der Quelle 50 (Fig.1) in nicht dargestellter Weise zuführbar ist.

Neben diesen Antrieben sind bei herkömmlichen Handhabungsgeräten vielfach noch ein oder mehrere Antriebe für den Greifer 38 selbst vorgesehen, was - bei herkömmlicher Ausführung - sehr schwere Greiferzangen erforderlich machen würde. Deshalb wurde hier ein anderer Weg beschritten.

Um den Werkzeughersteller der Mühe zu entbinden, besondere Griffflächen für den Greifer herstellen zu müssen, werden zweckmässig vorgefertigte Adapter Ad mittels Schraubbolzen Sb (am besten aus Fig. 4a ersichtlich) am Werkzeug 9 festgeschraubt. Jeder Adapter Ad besteht aus einem Befestigungsteil 70, einem Halsteil 71 und einem Bügelteil 72. Da - wie besonders aus Fig. 1 und den Werkzeugen im Abteil 20 ersichtlich ist - die Werkzeuge unterschiedliche Dimensionen besitzen können, werden zum Ausgleich dafür entweder Adapter mit unterschiedlichen Längen der Halsteile 71 vorgesehen und auf Lager gehalten, oder der Halsteil ist in seiner Länge verstellbar, beispielsweise indem der Bügelteil 72 mit dem Halsteil 71 über einen strichliert angedeuteten Bolzen 73, z.B. einen Schraubbolzen, verbunden ist, entlang dessen eine Längenverstellung möglich ist. Auf diese Weise kann die Länge des Halsteiles 71 so eingestellt werden, dass der Bügelteil 72 (unabhängig von der Breite des Werkzeuges 9) stets an die gleiche Stelle kommt. Dadurch kann vermieden werden, den Greifer 38 mit einer komplizierten Fühlersteuerung ausrüsten zu müssen, die die Annäherung an den Bügel oder eine Griff fläche des Werkzeuges erst erkennen müsste, um die weitere Greiferbewegung zu steuern.

Daher kann der Greifer 38 extrem einfach ausgebildet werden und besteht im gezeigten Ausführungsbeispiel a) einfach aus mindestens einem, wie Fig.4a jedoch zeigt, aus zwei gabelförmig angeordneten Haken H. Wird somit das Handhabungsgerät erstmalig zum Einsatz gebracht, so wird der Drehteller 66 in eine derartige Lage gebracht, dass der Greiferarm entsprechend Fig.4a geradewegs auf den Adapter Ad weist. Nun ist entweder der zugehörige Motor 60 als Schrittmotor ausgebildet, in welchem Falle diese Lage zwar sehr genau, jedoch mit teuren Mitteln angesteuert werden kann; oder man verwendet einen billigen, herkömmlichen Motor 60, in welchem Falle zweckmässig eine Verrastung vorgesehen ist. Dies kann entweder so erfolgen, dass der Drehteller 66 gegenüber der Hohlwelle 64 noch eine gewisse Drehbeweglichkeit besitzt und durch eine Keilraste 74 am Ende in die richtige Position gebracht wird, die beispielsweise von einem Kolben-Zylinderaggregat 75 betätigbar ist. Zusätzlich oder alternativ kann ein Positionsgeber für den Drehteller vorgesehen sein, wobei beispielsweise der Motor 60 erst dann abgeschaltet wird, bis die Raste 74 in die zugehörige (in Draufsicht) trichterförmige Ausnehmung des Drehtellers 66 eingefallen ist. In diesem Fall kann der Drehteller 66 mit der Hohlwelle 64 starr verbunden sein.

Bei diesem Schwenkvorgang nimmt der Kolben 69 seine unterste Lage ein, so dass der Haken H die in Fig.3a gezeigte strich-punktierte Position innehat und unter dem Bügelteil 72 eingeschwenkt wird. Sobald die Raste 74 in die zugehörige Ausnehmung des Drehtellers 66 eingefallen ist, wird Druckmedium unter den Kolben 69 gelassen, so dass sich dieser so weit hebt, bis der Greiferarm 32 die in Fig.3a mit vollen Linien gezeigte Position einnimmt, wobei der Haken H den Bügel 72 erfasst.

Der Greiferarm 32 liegt an der Kolbenstange des Kolbens 69 lediglich unter seinem Eigengewicht auf. Es versteht sich daher, dass während des Betriebes der Presse 1 die Gefahr eines ständigen Vibrierens - unter Lärmentwicklung und der Gefahr des Ausschlagens der Schwenklagerung an der Achse 68 - bestünde. Es ist daher zweckmässig, den Greiferarm 32 in seiner Ruhelage, d.h. während des Betriebes der Stanzpresse 1, gegen einen ortsfesten Teil zu spannen. An sich könnte das ein beliebiger Teil an der Presse sein, doch wird der Greiferarm 32 bevorzugt gleich gegen den Bügelteil 72 verspannt, so dass keine besonderen Einrichtungen erforderlich sind. Das bedeutet, dass der Kolben 69 während des Pressenbetriebes in seiner oberen Stellung unter Druck gehalten wird. Dies kann entweder so erfolgen, das für das den Druckmediumzustrom steuernde (nicht dargestellte) Ventil eine Nebenschlussleitung zum Schalter S2 zur Steuerung vorzusehen ist, oder dass dieses Ventil im stromlosen Zustand seines Magneten die Druckmittelquelle 50 mit der Unterseite des Kolbens 69 verbindet.

Ein weiteres Problem liegt darin, dass mit einem derart einfachen Greifer 38 das Werkzeug 9 (samt dem darauf abgestellten Werkzeug 12) nur an einer Seite erfasst werden kann, wenn nicht teure Konstruktionen für einen zweiten Angriffspunkt erforderlich sein sollen. Damit übt aber das Werkzeug ein erhebliches Schwenkmoment auf den Greiferarm 32 und vor allem auf den Greifer 38 selbst aus.

Um diese Schwenkmomente aufzunehmen, ist zweckmässig am Greifer 38 mindestens eine Stützfläche F vorgesehen, mit deren Hilfe er sich an einer Gegenstützfläche cf des Werkzeuges, vorzugsweise aber des Adapters abzustützen vermag. Wie Fig.3a zeigt, befindet sich die Stützfläche F des Greifers 38 an seiner vorderen Stirnseite, wogegen die Gegenstützfläche cf am Befestigungsteil 70 des Adapters Ad ihm gegenüberliegt. Falls Adapter mit verstellbarem Halsteil 71 verwendet werden, müsste die Gegenstützfläche entweder ebenfalls verstellbar sein, oder mit dem Bügelteil 72 in Verbindung stehen, von dem sie ja zur Abstützung am Greifer 38 einen entsprechenden, vorbestimmten Abstand haben muss. Immerhin wird an Hand der weiteren Ausführungsbeispiele b) bis e) ersichtlich, dass zahlreiche verschiedene Anordnungen für die Stützfläche F möglich sind.

Für das Ausführungsbeispiel b) gemäss den Fig.3b und 4b ist wiederum als Beispiel die Presse 1 gewählt, an der jedoch eine Variante 131 des Handhabungsgerätes zu sehen ist. Hier geht es darum, mit Hilfe zweier übereinander angeordneter Greiferarme 32a,32b zwei Werkzweuge 109,112 getrennt voneinander zu erfassen, falls diese aus irgendwelchen Gründen nicht aufeinander gestellt werden und gemeinsam transportiert werden sollen.

In der Ausführung b) sind die Werkzeuge 109 und 112 etwas abweichend von den Werkzeugen 9 und 12 ausgebildet, und ebenso die zugehörigen Haltevorrichtungen 108,111. Die letzteren weisen nämlich Zentrierdorne 75 auf, die entsprechende Bohrungen der Werkzeuge 109,112 durchsetzen, während an der gegenüberliegenden Seite die schon beschriebenen Spannbacken 35 angreifen. Gegebenenfalls können den Zentrierdornen Antriebe zugeordnet sein, um sie in die Haltevorrichtung 108 bzw. 111 zurückzuziehen.

Die beiden Greiferarme 32a,32b sind an einem gemeinsamen Träger 76 starr befestigt und mit diesem durch einen Kolben 139 entlang einer rohrförmigen Verlängerung 166 der Hohlwelle 164 verschiebbar. Dabei kann zur Vermeidung eines Verkantens eine radial ausserhalb des Trägers angeordnete Schiebeführung 77 vorgesehen sein. Um die Schwenkbewegungen um die Achse 39 nicht zu behindern bzw. damit nicht der Träger für die Schwenkbewegung erst ausser Eingriff mit der Führung 77 gebracht werden muss, kann diese als Zylinderwandteil ausgebildet sein, der in eine entsprechend geformte Ausnehmung 78 des Trägers 76 eingreift, falls die Führung 77 am Handhabungsgerät 131 angeordnet wäre; doch vereinfacht sich die Konstruktion, wenn sie sich - wie gezeigt - mit der Hohlwelle 164 mitdreht, so dass ein einfacher Stift 77 genügt.

Auch die Ausbildung der beiden Greifer 138 weicht von der der Ausführungsform a) ab. Hier ist eine horizontale Stützfläche F1 vorgesehen, die relativ gross ausgebildet sein kann. Ausserdem kann von dieser Stützfläche ein in eine Oeffnung des Werkzeuges 109 bzw.112 eingreifender Vorsprung, Zahn od.dgl. 79 vorragen. Mit diesen Stützflächen F1 wirkt je ein von einem Zylinderaggregat 80 verschiebbarer Keil 81 zusammen und hält so das Werkzeug 109 bzw.112 fest an die Stützfläche F1 gepresst.

Wenn nun das Werkzeug 109 bzw.112 zwischen Stützfläche F1 und Keil 91 festgeklemmt ist, so kann es durch Schwingungen beim Transport - besonders aber, wenn die Greiferarme 32a, 32b in ihrer Ruhelage am Werkzeug 109,112 festgeklemmt werden, um ein Vibrieren der Arme zu vermeiden - leicht geschehen, dass sich die Keile 81 an der entsprechenden Fläche des Werkzeuges festfressen. Dazu kommt, dass die Kolbenfläche der Aggregate 80 an der den Keilen 81 zugekehrten Seite noch durch dieselben verringert ist, so dass die zur Freigabe aufbringbare Kraft geringer als die Kraft zum Festklemmen wäre. Dies könnte dadurch vermieden werden, dass auch die Kolbenfläche an der den Keilen abgewandten Seite verringert wird, etwa indem dort eine Kolbenstange etwa gleichen oder sogar grösseren Durchmessers angebracht wird, als dem Durchmesser der Keile 81 entspricht.

Gemäss Fig.3b ist jedoch eine andere Lösung getroffen, durch die es einfach ermöglicht wird, für die Freigabe eine grössere Kraft aufzuwenden, als zum Spannen. Dabei sind die Aggregate 80 über Leitungen L1, L2 und über ein Magnetventil MV1 mit der Druckmediumquelle 50 verbunden. Während aber die Verbindung über die Leitungen L1 unmittelbar zur den Keilen 81 abgewandten Seite der Aggregate 80 verläuft, ist in die Leitungen L2 ein Multiplikatorkolben 82 zwischengeschaltet, der den von der Quelle 50 kommenden Druck für die Freigabe verstärkt.

Fig.4b zeigt in Draufsicht, wie ein Keil 81 das Werkzeug an einem vorragenden Teil ergreift. Es ist daraus ersichtlich, dass der vorragende Teil als Adapter Ad1 einen Befestigungsteil 170 und einen Halsteil 171 besitzen kann, wogegen hier ein Bügelteil fehlt. Ferner ist aus dieser Figur nochmals deutlich die koordinierte Schiebe- und Schwenkbewegung des Handhabungsgerätes 131 bzw. seiner Greiferarme 32a,32b ersichtlich, bis das Werkzeug (nur das Werkzeug 109 ist sichtbar) zwischen den Führungssäulen 33 heraus und in die Werkzeugentnahmelage 109" gezogen ist.

An dieser Stelle sei erwähnt, dass das Handhabungsgerät gewünschtenfalls auch zum Handhaben von Werkstücken eingesetzt werden kann, obwohl dies in der Regel nicht erforderlich sein wird. Zu diesem Zweck könnte gerade ein Handhabungsgerät 131 gemäss der Ausführung b) verwendet werden, weil die Klemmung mit den Keilen 81 sich gut auch für die Stanzbleche 6 eignet. Beispielsweise könnte das Handhabungsgerät 131 am unteren Ende (bezogen auf Fig.4b) der Führung 30 eine Werkstückentnahmelage besitzen. Ferner sei erwähnt, dass die Uebergabelage gemäss den Fig.1 und 2 zwar eine besonders günstige Ausführung darstellt, dass aber der Greiferarm, um in die Uebergabelage zu gelangen, auch aus der Stellung 31" (Fig.2) des Handhabungsgerätes gegen die Türe 16 schwenken könnte, um das Werkzeug dort auf einen ausserhalb des Schallschutzgehäuses 15 vorbeifahrenden Wagen abzulegen. Solche meist schienengebundene Wagen sollen aber möglichst vermieden werden, und es versteht sich auch, dass eine so weit ausholende Schwenkbewegung des Greiferarmes vom Bedienungspersonal eine erhöhte Vorsicht verlangt.

In den Fig.3c und 3d sind die Ausführungen c) und d) gezeigt, zu denen die Fig.4c/d einen Schnitt nach den Linien IV-IV der Fig. 3c und 3d darstellt.

Die Fig.3c ähnelt der Fig.3b insoferne, als auch hier zwei übereinanderliegende Greiferarme 32a,32b vorgesehen sind. An sich braucht der gemeinsame Träger 176 überhaupt keine vertikale Bewegung auszuführen, wenn die Werkzeuge 209,212 stets auf gleicher Höhe liegen, zumal der Greifer 238 hiefür besonders ausgebildet ist. Falls dennoch eine vertikale Bewegung des Trägers 176 erwünscht ist, bedarf es nicht unbedingt eines Kolbens 139 (Fig. 3b). Es kann eine Leitung L3 von der Druckmediumquelle 50 (vgl. Fig.1) an die Unterseite der Hohlwelle 264 gelegt sein, die in diesem Falle zweckmässig gegen ihre Lager 83 zu in nicht dargestellter Weise abgedichtet ist. An der Oberseite wirkt dann der Druck über eine Oeffnung 84 direkt auf den Träger 176 ein.

An Stelle des Hakens H ist hier ein hakenartiger Dorn H1 vorgesehen, der durch die aus Fig.3b bekannten Aggregate 80 betätigbar ist. Hier ist allerdings mangels einer Keilwirkung der Multiplikatorkolben 82 nicht erforderlich. Wie jedoch Fig.4c/d zeigt, besitzt jeder Greiferarm 32a bzw. 32b je ein Paar von Aggregaten 80 zur Betätigung von Dornen H1,H1'. Die Werkzeuge 209,212 besitzen entweder selbst derartige Ansätze oder es ist jeweils ein aus Fig. 4c/d ersichtlicher Adapter Ad2 mit einem Befestigungsteil 270, einem kurzen Halsteil 271 (der gegebenenfalls entfallen kann) und einem abgewinkelten Bügelteil 272 vorgesehen, der bezüglich eines Mittelpunktes Mi kreisbogenförmig gewölbt ist. Zu diesem Kreisbogen verlaufen die Achsen der Dorne H1,H1'in Radialrichtung, so dass sich die Dorne H1, H1'nach dem Eindringen in entsprechende Bügelöffnungen O, O' des Bügelteiles 272 hinter diesem aufspreizen. Ein zufälliges Lösen der so erzielten Verbindung wird dadurch unmöglich. Dennoch ist es vorteilhaft, am Stirnende des Greiferarmes 32a bzw. 32b jeweils wieder eine die von den Werkzeugen 209,212 ausgeübten Drehmomente aufnehmende Stützfläche F vorzusehen (Fig.3c).

Fig.3d zeigt, wie die Konstruktion aussieht, wenn beide Werkzeuge 209,212 übereinandergestellt von einem einzigen Greiferarm 32a transportiert werden, wobei bezüglich der übrigen Teile auf die vorige Beschreibung verwiesen wird.

Eine Ausführung mit einem Teleskopgreiferarm 132 wird sich bei besonders beengten Platzverhältnissen empfehlen, doch kann, um die Teleskoplänge kurz zu halten, die aus Fig.4e ersichtliche und oben bereits beschriebene Koordinationssteuerung durch das Steuergerät 37 auch hier zur Anwendung kommen, obwohl es an sich mittels eines Teleskopgreiferarmes 132 möglich wäre, eine geradlinige Schiebebewegung entlang der Linie L zu erzielen. Der im übrigen entsprechend den Ausführungen c) und d) ausgebildete Greifer 238 sitzt dementsprechend auf einer Kolbenstange 85 eines Zylinderaggregates 86, wobei ihr zur Verdrehungssicherung die aus Fig.4e ersichtlichen Führungen 87 (oder wenigstens eine davon) zugeordnet sind.

## Patentansprüche

1. Presse mit einem Gestell und einem aus wenigstens zwei Teilen bestehenden Werkzeug, auf welchem Gestell eine erste Haltevorrichtung zur Aufnahme eines ersten Werkzeugteiles montiert ist, relativ zu welcher eine zweite Haltevorrichtung für das Gegenwerkzeugteil mit Hilfe eines Antriebes bewegbar ist, an welcher Presse ein Handhabungsgerät mit wenigstens einem Greifarm mittels eines Lagerkörpers gelagert ist, der ausschliesslich an dem die erste Haltevorrichtung tragenden Gestell montiert ist, wobei der Greifer in einer parallel zur Ebene der Haltevorrichtungen und senkrecht zu deren Bewegungsrichtung verlaufenden Ebene aus einer Ruhelage in eine Uebergabelage zu einer mehrere Werkzeuge aufnehmenden Ablageeinrichtung bringbar ist, gekennzeichnet durch die Kombination folgender Merkmale:

    a) es ist eine Hebevorrichtung (69;139;84;176) für den Greifarm (32;32a,32b;132) vorgesehen, durch die die vom Greifer (38,H;138;238;H1,H1';H2) ergriffenen Werkzeuge (9,12;109,112;209,212;312) anhebbar sind;
    b) der Greifer (38,H;138;238;H1,H1';H2) ist zwischen Ruhelage und Uebergabelage in wenigstens eine Werkzeugentnahmelage bewegbar, in der zumindest eines der beiden mit den Haltevorrichtungen (8,11) verbundenen Werkzeuge (9,12;109,112;209,212;312) nach dem Lösen seiner Verbindungseinrichtungen (35) mit der Haltevorrichtung (8,11) von letzterer entfernt ist;
    c) es ist wenigstens eine Schiebeführung (30;85;88) für den Greifer (38,H;138;238,H1,H1';H2) vorgesehen, wobei der Lagerkörper (30) als eine entlang des Gestelles (7) und parallel zur Ebene der Haltevorrichtungen (8,11) verlaufende Schiebeführung ausgebildet ist;

d) der Greifarm ist um eine parallel zur Bewegungsrichtung der relativ zueinander bewegbaren Haltevorrichtungen (8,11) für das Stanzwerkzeug (9,12;109,112;209,212;312) verlaufende Achse (39) aus einer neben der Stanzpresse vorgesehenen Ruhelage in eine wenigstens annähernd entlang der Schiebeführungsbahn (30) weisende Werkzeugentnahmelage schwenkbar.

2. Presse nach Anspruch 1, dadurch gekennzeichnet, dass die Presse (1) eine Hochgeschwindigkeitspresse, vorzugsweise eine Stanzpresse ist, deren Antrieb für eine Bewegungsfrequenz der Haltevorrichtungen (8,11) von wenigstens 500/min ausgebildet ist.

3. Presse nach Anspruch 1 oder 2, dadurch gekennzeichnet, dass die Bewegung der Haltevorrichtungen (8,11) mittels Führungseinrichtungen (33) in vertikaler Richtung geführt ist, und dass das Handhabungsgerät (31) unterhalb der Haltevorrichtungen (8,11) für das Werkzeug (9,12) am Gestell (7) gelagert ist. (Fig. 1)

4. Presse nach einem der vorhergehenden Ansprüche, dadurch gekennzeichnet, dass das Handhabungsgerät (31) elastisch gelagert ist, insbesondere durch eine elastische Lagerung (14) für Handhabungsgerät (31) und Gestell (7) gemeinsam, gegebenenfalls an der Seite der Lagerung des Handhabungsgerätes am Gestell stärker dimensioniert, und dass bevorzugt eine Arretiereinrichtung (42) zur Unterbindung einer elastischen Bewegung vorgesehen ist.

5. Presse nach einem der vorangehenden Ansprüche, dadurch gekennzeichnet, dass wenigstens ein Greiferarm (32;32a,32b;132) in der Ruhelage wenigstens mit seinem grösseren Teil innerhalb einer vom Querschnitt der Presse (1) und dem Gehäuse (56) bzw. dem Lagerungskörper (30) des Handhabungsgerätes (31) gebildeten Umrisslinie liegt.

6. Presse nach einem der vorhergehenden Ansprüche, dadurch gekennzeichnet, dass vorzugsweise auch die Ablageeinrichtung (21-24), jedenfalls aber das Handhabungsgerät (31) wenigstens in seiner Ruhelage innerhalb eines die Presse (1) umgebenden Schallschutzgehäuses (15) untergebracht ist.

7. Presse nach einem der vorhergehenden Ansprüche, dadurch gekennzeichnet, dass eine Spanneinrichtung (69) vorgesehen ist, mit deren Hilfe der Greifarm (32) in der Ruhelage mit dem Gestell (7) fest verbindbar ist, und dass diese Spanneinrichtung vorzugsweise von einem Bewegungsantrieb (69) für den Greifarm (32) selbst gebildet ist.

8. Presse nach einem der vorhergehenden Ansprüche, dadurch gekennzeichnet, dass eine der Schiebe- und der Schwenkbewegung zugeordnete gemeinsame Steuervorrichtung (37) vorgesehen ist, durch die das Werkzeug (9,12;109,112; 212;312) im wesentlichen entlang einer geraden Linie (6) zwischen Führungssäulen (33) der Presse (1) in die Werkzeugentnahmelage bewegbar ist.

9. Presse nach einem der vorhergehenden Ansprüche, dadurch gekennzeichnet, dass der Greifer (38,H;138;238,H1,H1') zum Anheben des Werkzeuges (9,12;109,112;209,212) von seiner Haltevorrichtung (8,11) auch quer zur Ebene derselben bewegbar, insbesondere um eine parallel zur Ebene der Haltevorrichtung (8,11) liegende Achse (68) schwenkbar ist, und dass der Greifer (38,H;138;238,H1,H1') ausser einem Greifwerkzeug (H;81;H1;H1') mindestens eine Stützfläche (F,F1) zur Aufnahme des vom einseitig erfassten Werkzeug ausgeübten Drehmomentes aufweist, die (F) vorzugsweise vertikal verläuft.

10. Presse nach einem der vorhergehenden Ansprüche, dadurch gekennzeichnet, dass das Handhabungsgerät (131';131") wenigstens einen Greifer (238) mit zwei in mindestens einer Oeffnung (O bzw. O') am aufzunehmenden Gegenstand (209) spreizbaren Greiferwerkzeugen (H,H1) aufweist.

11. Presse nach einem der Ansprüche 8, 9 oder 10, dadurch gekennzeichnet, dass eine Halteteil, z.B. ein Bügel (72;172;272;372) parallel zur Kante des Werkzeuges verlaufend an diesem befestigt ist, der sich von einer Befestigungsanordnung (70;170;270;370) für das jeweilige Werkzeug (9,12;109,112;209,212;312) weg erstreckt, welche Befestigungsanordnung zumindest eine Befestigungsfläche aufweist und für das Zusammenwirken mit einem Adapter (Ad;Ad1;Ad2;Ad3) zum Handhaben unterschiedlicher Werkzeuge ausgebildet ist.

**12.** Presse nach Anspruch 11, dadurch gekennzeichnet, dass die Befestigungsanordnung ausser der Befestigungsfläche auch eine dazu senkrecht verlaufende Gegenstützfläche für die Stützfläche (F) des Greifers (38;138;238) aufweist.

## Claims

**1.** Press having a stand and a tool consisting of at least two parts, on which stand a first holding apparatus for holding a first tool part is mounted, relative to which apparatus a second holding apparatus for the counter-tool part can be moved with the aid of a drive, on which press a handling device which has at least one gripping arm is supported by means of a bearing element which is mounted exclusively on the stand carrying the first holding apparatus, and the gripper can be brought, in a plane parallel to the plane of the holding apparatuses and at right angles to their direction of movement, from a rest position to a position for transfer to a magazine holding several tools, characterized by the combination of the following features:

a) A lifting apparatus (69; 139; 84; 176) is provided for the gripping arm (32; 32a, 32b; 132), by means of which lifting apparatus the tools (9, 12; 109, 112; 209, 212; 312) gripped by the gripper (38, H; 138; 238; H1, H1'; H2) can be raised;

b) between the rest position and the transfer position, the gripper (38, H; 138; 238; H1, H1'; H2) can be moved into at least one tool-removal position, in which at least one of the two tools (9, 12; 109, 112; 209, 212; 312) connected to the holding apparatuses (8, 11) is a distance away from the holding apparatus (8, 11) after its means (35) of connection to the said holding apparatus have been detached;

c) at least one sliding guide (30; 85; 88) is provided for the gripper (38, H; 138; 238, H1, H1'; H2), the bearing element (30) being in the form of a sliding guide which runs along the stand (7) and parallel to the plane of the holding apparatuses (8, 11);

d) the gripping arm can be swivelled about an axis parallel to the direction of movement of the holding apparatuses (8, 11) for the punch tool (9, 12; 109, 112; 209, 212; 312), which apparatuses can be moved relative to one another, from a rest position adjacent to the punch press to a tool-removal position directed at least approximately along the sliding guide track (30).

**2.** Press according to Claim 1, characterized in that the press (1) is a high-speed press, preferably a punch press, whose drive is designed for a frequency of movement of the holding apparatuses (8, 11) of at least 500/min.

**3.** Press according to Claim 1 or 2, characterized in that the movement of the holding apparatuses (8, 11) is guided in a vertical direction by guide means (33), and the handling device (31) is mounted underneath the holding apparatuses (8, 11) for the tool (9, 12), on stand (7) (Fig. 1).

**4.** Press according to any of the preceding Claims, characterized in that the handling device (31) is elastically mounted, in particular an elastic mounting (14) is provided for the handling device (31) and the stand (7) together and, if necessary, has greater dimensions on the side on which the handling device is mounted on the stand, and a locking means (42) is preferably provided for suppressing elastic movement.

**5.** Press according to any of the preceding Claims, characterized in that at least the larger part of at least one gripping arm (32; 32a, 32b; 132), in the rest position, is within an outer contour line formed by the cross-section of the press (1) and the housing (56) or the bearing element (30) of the handling device (31).

**6.** Press according to any of the preceding Claims, characterized in that the magazine (21-24) too, but in any case the handling device (31), is preferably accommodated, at least in its rest position, inside a sound-insulating housing (15) surrounding the press (1).

**7.** Press according to any of the preceding Claims, characterized in that a clamping means (69) is provided, with the aid of which the gripping arm (32) in the rest position can be firmly connected to the stand (7), and this clamping means preferably formed by a displacement drive (69) for the gripping arm (32) itself.

**8.** Press according to any of the Preceding Claims, characterized in that a ccmmon control apparatus (37) coordinated with the sliding and the swivelling movement is provided, by means of which the tool (9, 12; 109, 112; 212; 312) can be moved essentially along a straight line (6) between guide columns (33) of the press (1) to the tool-removal position.

9. Press according to any of the preceding Claims, characterized in that, in order to lift the tool (9, 12; 109, 112; 212) from its holding apparatus (8, 11), the gripper (38, H; 138; 238, H1, H1') can also be moved transverse to the plane of the said apparatus, in particular can be rotated about an axle (68) parallel to the plane of the holding apparatus (8, 11), and, in addition to a gripping tool (H; 81; H1; H1'), the gripper (38, H; 138; 238, H1, H1') has at least one support surface (F, F1) for taking up the torque exerted by the tool gripped on one side, which (F) is preferably vertical.

10. Press according to any of the preceding Claims, characterized in that the handling device (131'; 131'') has at least one gripper (238) with two gripping tools (H, H1) which can be spread in at least one orifice (O or O') in the article to be picked up.

11. Press according to any of Claims 8, 9 or 10, wherein a holding part, for example a bracket (72; 172; 272; 372), which extends away from a fastening arrangement (70; 170; 270; 370) for the particular tool (9, 12; 109, 112; 209, 212; 312), is fastened to the tool in such a way that it runs parallel to the edge of the tool, which fastening arrangement has at least one fastening surface and is formed for cooperating with an adapter (Ad; Ad1; Ad2; Ad3) for handling different tools.

12. Press according to Claim 11, characterized in that, in addition to the fastening surface, the fastening arrangement also has a counter-supporting surface, at right angles to the said fastening surface, for the supporting surface (F) of the gripper (38; 138; 238).

## Revendications

1. Presse avec un bâti et un outil composé d'au moins deux parties, bâti sur lequel, pour recevoir une première partie d'outil, est monté un premier dispositif de maintien, par rapport auquel un deuxième dispositif de maintien pour la contre-partie d'outil est déplaçable à l'aide d'un entraînement, presse sur laquelle un outil de manipulation, avec au moins un bras préhenseur, est monté à l'aide d'un corps de support qui est monté exclusivement sur le bâti portant le premier dispositif de maintien, le préhenseur pouvant être amené d'une position de repos à une position de transfert à un dispositif de dépose recevant plusieurs outils en se déplaçant dans un plan parallèle au plan des dispositifs de maintien et perpendiculaire à leur direction de déplacement, caractérisée par la combinaison des caractéristiques suivantes :

a) il est prévu pour le bras préhenseur (32;32a,32b;132) un dispositif de levage (39;139;84;176), grâce auquel les outils (9,12;109,112;209,212;312) saisis par le préhenseur (38,H;138;238;H1,H1';H2) sont susceptibles d'être levés;

b) le préhenseur (38,H;138;238;H1,H1';H2) est déplaçable, entre la position de repos et la position de transfert, en passant dans au moins une position de prélèvement d'outil, dans laquelle au moins l'un des deux outils (9,12;109,112;209,212;312) reliés aux dispositifs de maintien (8,11), après désolidarisation de ses dispositifs de liaison (35) au dispositif de maintien (8,11), peut être éloigné de ce dernier;

c) il est prévu au moins un dispositif de poussée (30;85;88) pour le préhenseur (38,H;138;238;H1,H1';H2), le corps de support (30) étant réalisé sous forme d'un guidage coulissant, qui s'étend le long du bâti (7) et parallèlement au plan des dispositifs de maintien (8,11);

d) le bras préhenseur est pivotant, autour d'un axe (39) s'étendant parallèlement à la direction de déplacement des dispositifs de maintien (8,11), déplaçables les uns par rapport aux autres, destinés à l'outil d'estampage (9,12;109,112;209,212;312), en pivotant d'une position de repos, prévue à côté de la presse à estamper, en une position de prélèvement d'outil, orientée au moins à peu près le long de la trajectoire de guidage coulissant (30).

2. Presse selon la revendication 1, caractérisée en ce que la presse (1) est une presse à cadence élevée, de préférence une presse d'estampage, dont l'entraînement est conçu pour une fréquence de déplacement des dispositifs de maintien (8,11) d'au moins 500 mouvements/minute

3. Presse selon la revendication 1 ou 2, caractérisée en ce que le mouvement des dispositifs de maintien (8,11) est guidé en direction verticale à l'aide de dispositifs de guidage (33), et l'appareil de manipulation (31) étant monté sur le bâti (7) au-dessous des dispositifs de maintien (8,11) pour l'outil (9,12). (figure 1).

4. Presse selon l'une des revendications précédentes, caractérisée en ce que l'appareil de manipulation (31) est monté élastiquement, en particulier grâce à un support élastique (14) commun pour l'appareil de manipulation (31) et le bâti (7), de dimensionnement plus résistant le cas échéant du côté du montage de l'appareil de manipulation sur le bâti, et un dispositif de blocage (42) destiné à interrompre un déplacement élastique étant de préférence prévu.

5. Presse selon l'une des revendications précédentes, caractérisée en ce qu'au moins un bras préhenseur (32;32a,32b;132) se trouve, en position de repos, au moins pour sa plus grande partie, à l'intérieur d'une ligne de contour, formée par la section transversale de la presse (1) et le carter (56), respectivement le corps de support (30) de l'appareil de manipulation (31).

6. Presse selon l'une des revendications précédentes, caractérisée en ce que de préférence également le dispositif de dépose (21 à 24), mais en tous cas l'appareil de manipulation (31), sont logés, au moins dans la position de repos de ce dernier, à l'intérieur d'un carter de protection contre le bruit (15) qui entoure la presse (1).

7. Presse selon l'une des revendications précédentes, caractérisée en ce qu'est prévu un dispositif de serrage (69), à l'aide duquel, en position de repos, le bras préhenseur (32) est susceptible d'être relié rigidement au bâti (7), et ce dispositif de serrage étant de préférence formé par un entraînement à déplacement (69) pour le bras préhenseur (32) même.

8. Presse selon l'une des revendications précédentes, caractérisée en ce qu'est prévu un dispositif de commande (37) commun, associé au mouvement de coulissement et de pivotement, grâce auquel l'outil (9,12;109,112;212;312) est déplaçable sensiblement le long d'une ligne droite (6), entre des colonnes de guidage (33) de la presse (1), pour aller en position de prélèvement d'outil.

9. Presse selon l'une des revendications précédentes, caractérisée en ce que, pour soulever l'outil (9,12;109,112;209,212), le préhenseur (38,H;138;238,H1,H1') est déplaçable de son dispositif de maintien (8,11), également transversalement au plan de ce dernier, en particulier en pouvant pivoter autour d'un axe (68) parallèle au plan du dispositif de maintien (8,11), et le préhenseur (38,H;138;238,H1,H1') présentant, outre un outil de prise (H;81;H1;H1'), au moins une surface d'appui (F,F1), qui (F) s'étend de préférence verticalement, pour supporter le couple de rotation exercé par l'outil saisi d'un côté.

10. Presse selon l'une des revendications précédentes, caractérisée en ce que l'appareil de manipulation (131';131") présente au moins un préhenseur (238) avec deux outils de prise (H,H1), susceptibles d'être écartés dans au moins une ouverture (O, respectivement O') située sur l'objet (209) à recevoir.

11. Presse selon l'une des revendications 8, 9 ou 10, caractérisée en ce qu'une partie de maintien, par exemple un étrier (72;172;272;372) s'étendant parallèlement aux arêtes de l'outil, est fixée sur ce dernier et s'étend depuis un dispositif de fixation (70;170,270;370) pour l'outil concerné (9,12;109,112;209,212;312), dispositif de fixation qui présente au moins une surface de fixation et est conçu pour coopérer avec un adaptateur (Ad;Ad1;Ad2;Ad3), en vue de manipuler différents outils.

12. Presse selon la revendication 11, caractérisée en ce que le dispositif de fixation présente également, outre la surface de fixation, une contre-surface d'appui, s'étendant perpendiculairement à la surface de fixation, pour la surface d'appui (F) du préhenseur (38;138;238).

Fig. 1

EP 0 241 933 B1

EP 0 241 933 B1

Fig. 2

17

Fig. 3a

Fig. 3b

Fig. 3c

Fig. 3d

Fig. 3e

Fig. 4a

Fig. 4b

Fig. 4c/d

Fig. 4e